(19) Europäisches Patentamt / European Patent Office / Office européen des brevets

(11) **EP 4 252 089 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **21819811.7**

(22) Anmeldetag: **24.11.2021**

(51) Internationale Patentklassifikation (IPC):
***G05B 19/418*** (2006.01)

(52) Gemeinsame Patentklassifikation (CPC):
**G05B 19/41815;** G05B 2219/39102; Y02P 90/02

(86) Internationale Anmeldenummer:
**PCT/EP2021/082816**

(87) Internationale Veröffentlichungsnummer:
**WO 2022/112325 (02.06.2022 Gazette 2022/22)**

(54) **BEWEGUNGSSTEUERUNG EINES OBJEKTS**

CONTROLLING THE MOVEMENT OF AN OBJECT

COMMANDE DU MOUVEMENT D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2020 AT 510332020**

(43) Veröffentlichungstag der Anmeldung:
**04.10.2023 Patentblatt 2023/40**

(73) Patentinhaber: **B&R Industrial Automation GmbH
5142 Eggelsberg (AT)**

(72) Erfinder:
• **NEUBAUER, Matthias
5142 Eggelsberg (AT)**
• **HÖBARTH, Wolfgang
5142 Eggelsberg (AT)**
• **MESSNER, Lukas
5142 Eggelsberg (AT)**
• **KASERER, Dominik
5142 Eggelsberg (AT)**

(74) Vertreter: **Patentanwälte Pinter & Weiss OG
Prinz-Eugen-Straße 70
1040 Wien (AT)**

(56) Entgegenhaltungen:
EP-A2- 0 333 345      DE-A1- 10 162 967
DE-A1- 19 841 716     US-A- 5 727 132

**Beschreibung**

Die gegenständliche Erfindung betrifft ein Verfahren zum Steuern einer Bewegung eines Objekts in Relation zu einer Transporteinheit eines Transportsystems, wobei die Transporteinheit in Bezug auf ein Bezugskoordinatensystem entlang einer vorgegeben Transporttrajektorie bewegt wird. Weiters betrifft die gegenständliche Erfindung ein System aus einem Transportsystem mit einer entlang einer in Bezug auf ein Bezugskoordinatensystem vorgegeben Transporttrajektorie bewegten Transporteinheit und einem in Relation zur Transporteinheit bewegten Objekt.

In Transportsystemen wird eine Transporteinheit entlang einer Transporttrajektorie bewegt, wobei die Transporttrajektorie beispielsweise in Bezug auf ein Bezugskoordinatensystem betrachtet werden kann. So können beispielsweise elektromagnetische Transportsysteme, wie Langstatorlinearmotoren oder Planarmotoren vorgesehen sein. Bei einem Langstatorlinearmotor ist eine Transportstrecke vorgesehen, entlang welcher zumindest ein Teil der Transporttrajektorie verläuft; bei einem Planarmotor verläuft zumindest ein Teil der Transporttrajektorie in einer Transportebene. Es kann weiter erforderlich sein, dass ein Objekt an der Transporteinheit entlang einer Objektbahn bewegt wird. Da die Transporteinheit selbst eine Bewegung durchführt, muss bei der Steuerung der Objektbahn auch die Transporttrajektorie berücksichtigt werden. Entsprechend schlägt die US 10,261,491 B1 vor, die Objektbahn, wie auch die Transporttrajektorie direkt in Bezug auf das Bezugskoordinatensystem zu ermitteln. Damit ist jedoch eine Planung der Objektbahn nur gemeinsam mit der Transporttrajektorie möglich.

Weiterhin ist aus der US 5,727,132 ein Verfahren zur Steuerung eines Roboters zum Verfolgen eines Objekts mit Hilfe eines optischen Sensors bekannt, wobei der Roboter vorgegebene Operationen an einem von einer Fördereinrichtung bewegten Werkstück durchführen soll. Erreicht das Werkstück eine gelernte Tracking-Startposition, wird vom Roboter ein Operationsprogramm ausgeführt, um Tracking-Bewegungen in Bezug auf ein Tracking-Koordinatensystem auszuführen. Dabei wird der Roboter auf einer Trajektorie zu einem berechneten bzw. korrigierten Zielpunkt bewegt, um das Werkstück zu erreichen.

Auch aus der DE 101 62 967 A1 ist ein Verfahren zur Steuerung eines Roboters und eine zugehörige Steuerung bekannt, wobei der Roboter einem auf einem Fördermittel bewegten Gegenstand folgt, um am Gegenstand vorbestimmte Handlungen durchzuführen. Der Gegenstand wird dazu mit einer Kamera erfasst, welche mit der Robotersteuerung verbunden ist, und eine aktuelle Position des Gegenstands im Fördermittelkoordinatensystem ermittelt und aktualisiert. Der Weg des Roboters, um dem Gegenstand zu folgen, wird dann durch Transformieren der Position des Werkstücks vom Förderkoordinatensystem in ein Roboterkoordinatensystem gebildet.

Es ist eine Aufgabe der gegenständlichen Erfindung, eine verbesserte Steuerung und Planung einer Objektbahn entlang einer Transporttrajektorie zu ermöglichen.

Diese Aufgabe wird gelöst, indem eine synchrone Phase vorgesehen wird, wobei während der synchronen Phase eine Bewegung eines Objektpunkts des Objekts entlang einer Objektbahn in Bezug auf ein Transporteinheitenkoordinatensystem, ungleich dem Bezugskoordinatensystem, vorgegeben wird, wobei das Transporteinheitenkoordinatensystem mit der Transporteinheit entlang der Transporttrajektorie bewegt wird. Dabei wird die Transporttrajektorie zumindest abschnittsweise unter Verwendung der Position und/oder der Geschwindigkeit und/oder der Beschleunigung der Transporteinheit ermittelt und zumindest ein Bahnpunkt der Objektbahn wird vom Transporteinheitenkoordinatensystem in ein Basiskoordinatensystem transformiert, um die Bewegung des Objektpunkts entlang der Objektbahn in Bezug auf das Basiskoordinatensystem zu steuern.

Weiters wird die Aufgabe durch eine Steuereinheit gelöst, welche ausgestaltet ist, während einer synchronen Phase eine Bewegung eines Objektpunkts des Objekts entlang einer Objektbahn in Bezug auf ein vom Bezugskoordinatensystem verschiedenes Transporteinheitenkoordinatensystem, welches mit der Transporteinheit entlang der Transporttrajektorie bewegt wird, vorzugeben, wobei die Transporttrajektorie unter Verwendung der Position und/oder der Geschwindigkeit und/oder der Beschleunigung der Transporteinheit zumindest abschnittsweise ermittelbar ist, und zumindest einen Bahnpunkt der Objektbahn, vom Transporteinheitenkoordinatensystem in ein Basiskoordinatensystem zu transformieren, um die Bewegung des Objekts in Bezug auf das Basiskoordinatensystem zu steuern.

Sind mehrere Objekte vorgesehen, so können die Objekte jeweils ein eigenes Transporteinheitenkoordinatensystem aufweisen. Die Objektbahn kann als geometrisches Konstrukt angesehen werden, entlang welchem der Objektpunkt relativ zur Transporteinheit bewegt wird. Da die Objektbahn in Bezug auf ein Transporteinheitenkoordinatensystem definiert ist, welches entlang der Transporttrajektorie (welche in Bezug auf ein Bezugskoordinatensystem definiert ist) mitbewegt wird, hat die Objektbahn eine einfachere Form/Geometrie/Gestalt, als wenn sie direkt in Bezug auf das Bezugskoordinatensystem definiert wäre.

Vorzugsweise ist das Transportsystem ein Langstatorlinearmotor, ein Planarmotor oder ein Stetigfördersystem (z.B. ein Förderbandsystem), wobei das Objekt vorteilhafterweise Teil einer Kinematik, z.B. ein Teil eines Werkzeugs, ist. Der Objektpunkt kann beispielsweise eine Werkzeugspitze darstellen.

Vorzugsweise entspricht das Bezugskoordinatensystem dem Basiskoordinatensystem. Damit wird die Transporttrajektorie in Bezug auf das Basiskoordinatensystem angegeben.

Die Transporttrajektorie wird vorzugsweise vom Transportsystem vorgegeben und kann somit nicht von der Steuereinheit beeinflusst werden.

Die Objektbahn kann vorab in Bezug auf das Transporteinheitenkoordinatensystem festgelegt werden oder während der Bewegung in Bezug auf das Transporteinheitenkoordinatensystem ermittelt werden. Die Objektbahn kann beispielsweise durch eine Eingabe eines Benutzers, z.B. durch setzen von Variablen etc. festgelegt oder beeinflusst werden.

Vorzugsweise wird ein Fortschritt des Objektpunkts entlang der Objektbahn über einen Bahnfortschrittsparameter angegeben, wobei die Objektbahn und/oder Ableitungen der Objektbahn entlang des Bahnfortschrittsparameters, vorzugsweise punktweise, unter Verwendung einer ersten Transformationsvorschrift vom Transporteinheitenkoordinatensystem in ein Maschinenkoordinatensystem überführt wird und die in das Maschinenkoordinatensystem überführte Objektbahn unter Verwendung einer zweiten Transformationsvorschrift in das Basiskoordinatensystem transformiert wird.

Der Bahnfortschrittsparameter kann eine eindimensionale Größe darstellen, welche den Fortschritt des Objektpunkts auf der Bahn repräsentiert. Der Bahnfortschrittsparameter kann somit die Position und Orientierung des Objektpunkts angegeben.

Statt dem Bahnfortschrittsparameter kann auch direkt die Position auf der Objektbahn oder eine andere Darstellung des Bahnfortschritts des Objektpunkts auf der Objektbahn gewählt werden.

Vorzugsweise ist die erste Transformationsvorschrift zeitabhängig. Weiters kann die zweite Transformationsvorschrift vom Bahnfortschrittsparameter abhängig und/oder zeitabhängig sein.

Es kann vor der synchronen Phase ein Kopplungsvorgang vorgesehen sein, wobei während dem Kopplungsvorgang das Objekt entlang einer Kopplungsbahn auf einen vorgegebenen Startpunkt im Transporteinheitenkoordinatensystem bewegt wird.

Es ist besonders vorteilhaft, wenn die Kopplungsbahn stetig an die Objektbahn anschließt, vorzugsweise stetig bis zur zweiten Ableitung. Damit wird für das Objekt ein stetiger Übergang von der Kopplungsbahn auf die Objektbahn erreicht, womit beispielsweise ein Stopp, ein Geschwindigkeitssprung oder ein Beschleunigungssprung des Objekts vermieden wird.

Die Kopplungsbahn startet vorzugsweise an einer festen Ruheposition im Basiskoordinatensystem. Das Objekt befindet sich vorzugsweise in der Ruheposition, wenn es sich außerhalb der synchronen Phase, sowie - sofern ein Kopplungsvorgang vorgesehen ist - außerhalb des Kopplungsvorgangs und - sofern ein Entkopplungsvorgang vorgesehen ist - außerhalb des Entkopplungsvorgangs befindet. Der Objektpunkt kann aber auch aus einer Bewegung in die Kopplungsbahn überführt werden. Die Kopplungsbahn kann im Transporteinheitenkoordinatensystem geplant und kann in Folge bedarfsweise optimiert werden.

Die Kopplungsbahn kann unter Verwendung der Position und/oder der Geschwindigkeit und/oder der Beschleunigung der Transporteinheit, ermittelt, vorzugsweise über ein Modell extrapoliert, werden. Beispielsweise können Bahnpunkte oder Bahnabschnitte der Kopplungsbahn kontinuierlich ermittelt werden. Die ermittelten Bahnpunkte oder Bahnabschnitte der Kopplungsbahn können an die Bewegung des Objektkoordinatensystems angepasst werden, um sicherzustellen, dass die Kopplungsbahn im Startpunkt mündet. Auch kann bei der Ermittlung der Kopplungsbahn die aktuelle Bewegung des Objektpunkts berücksichtigt werden.

Das Objekt kann unter Verwendung einer Anzahl an Achsen entlang der Objektbahn bewegt werden, wobei aus dem in das Basiskoordinatensystem transformierten zumindest einen Bahnpunkt der Objektbahn mittels einer Inverskinematik kinematische und/oder dynamische Achszustände, vorzugsweise Achswinkel und/oder deren zeitliche und/oder räumliche Ableitungen, der Anzahl Achsen ermittelt werden können.

Als Basiskoordinatensystem kann ein festes globales Koordinatensystem vorgesehen sein. Das Basiskoordinatensystem kann aber auch bewegt sein, insbesondere wenn es an einer Achse angeordnet ist und diese Achse nicht Teil der zugehörigen Kinematik oder der Bewegungssteuerung der zugehörigen Kinematik ist.

Die Achszustände können weiters mit Achsgrenzwerten verglichen werden. Damit kann sichergestellt werden, dass die Achszustände die Achsgrenzwerte nicht verletzten und die Änderung der Achszustände wird so bestimmt, dass zumindest ein Achszustand einer Achse sich stets an einem Achsgrenzwert befindet, um eine zeitoptimale Bewegung des Objekts entlang der Objektbahn zu erhalten.

Die Achsgrenzwerte können kinematischer Natur sein (Geschwindigkeitsgrenzwert, Beschleunigungsgrenzwert, Ruckgrenzwert etc.). Andererseits können die Achsgrenzwerte auch dynamischer Natur sein (Kraftgrenzwert, Momentgrenzwert etc.) sein Es kann nach der synchronen Phase ein Entkopplungsvorgang vorgesehen sein, wobei während dem Entkopplungsvorgang der Objektpunkt entlang einer Entkopplungsbahn von der Objektbahn entfernt wird.

Die Entkopplungsbahn kann auf einem vorgegebenen Endpunkt im Basiskoordinatensystem enden.

Vorteilhafterweise schließt die Entkopplungsbahn stetig, vorzugsweise stetig bis zur zweiten Ableitung, an die Objektbahn an. Damit wird für das Objekt ein stetiger Übergang von der Objektbahn auf die Kopplungsbahn erreicht, womit beispielsweise ein Stopp, ein Geschwindigkeitssprung oder ein Beschleunigungssprung des Objekts vermieden wird.

Nach der synchronen Phase kann ein Übergangsvorgang eine weitere synchrone Phase vorgesehen sein, wobei während des Übergangsvorgangs der Objektpunkt entlang einer Übergangstrajektorie von der Objektbahn auf einen weiteren Startpunkt in einem weiteren Transporteinheitenkoordinatensystem bewegt wird.

Bei der Steuerung der Bewegung des Objektpunkts (TCP) kann sichergestellt werden, dass die Geschwindigkeit des Objektpunkts (TCP) vorgegebene kinematische und/oder dynamische Limits nicht überschreitet, wobei es besonders vorteilhaft ist, wenn die Steuerung der Bewegung des Objektpunkts (TCP) möglichst am kinematischen und/oder dynamischen Limit erfolgt.

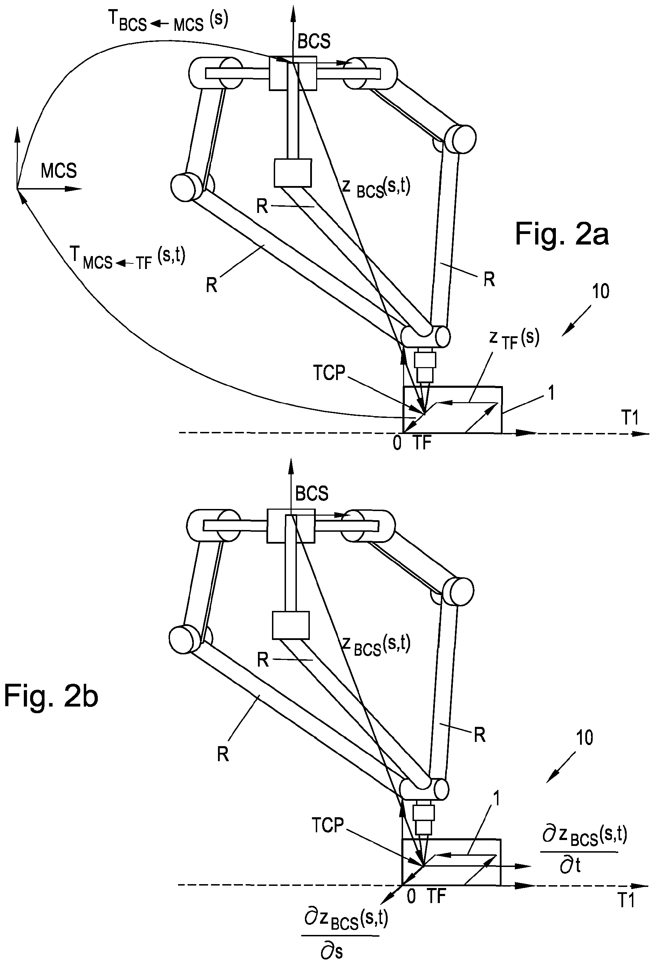

Die gegenständliche Erfindung wird nachfolgend unter Bezugnahme auf die Figuren 1 bis 3c näher erläutert, die beispielhaft, schematisch und nicht einschränkend vorteilhafte Ausgestaltungen der Erfindung zeigen. Dabei zeigt

Fig.1a ein Objektpunkt eines Objekts in einer Anfangsposition,

Fig.1b der Objektpunkt des Objekts auf der Koppeltrajektorie,

Fig.1c der Objektpunkt auf einem Startpunkt der Objektbahn im Transporteinheitenkoordinatensystem,

Fig.1d der Objektpunkt auf der Objektbahn im Transporteinheitenkoordinatensystem,

Fig.2a eine Transformation vom Transporteinheitenkoordinatensystem über ein Maschinenkoordinatensystem in das Basiskoordinatensystem,

Fig.2b die zeitliche und örtliche partielle Ableitung der in das Basiskoordinatensystem transformierten Objektbahn,

Fig.3a der Objektpunkt am Beginn der Entkopplungsbahn,

Fig.3b der Objektpunkt auf der Entkopplungsbahn

Fig.3c der Objektpunkt auf der Endposition am Ende der Entkopplungsbahn.

In den Figuren ist jeweils ein Basiskoordinatensystem BCS festgelegt. Es ist eine Transporteinheit 1 eines Transportsystems 10 vorgesehen, welche entlang einer Transporttrajektorie T1 bewegt wird. Die Transporttrajektorie T1 verläuft nur beispielhaft horizontal. Es kann ein elektromagnetisches Transportsystem, z.B. ein Planarmotor oder ein Langstatorlinearmotor, als Transportsystem 10 vorgesehen sein. Bei einem Planarmotor ist eine Transportebene vorgesehen, in welcher die Transporttrajektorie T1 verläuft. Bei einem Langstatorlinearmotor ist eine Transportstrecke vorgesehen, entlang welcher eine Transporttrajektorie T1 verläuft. Es wird in elektromagnetischen Transportsystemen durch eine Bestromung von Antriebsspulen (an der Transporteinheit oder an der Transportstrecke/in der Transportebene) ein Magnetfeld erzeugt, welches durch ein Zusammenwirken mit Antriebsmagneten eine Vortriebskraft erzeugt und somit die Bewegung der Transporteinheit 1 verursacht. Sind die Antriebsspulen an der Transporteinheit 1 vorgesehen, so befinden sich die Antriebsmagnete an der Transportstrecke / in der Transportebene. Sind die Antriebsspulen an der Transportstrecke / in der Transportebene vorgesehen, so befinden sich die Antriebsmagnete an der Transporteinheit 1. Weiters kann das Transportsystem als Stetigfördersystem (z.B. als Förderbandsystem) ausgestaltet sein. Dabei stellt die Transporteinheit die gegenüber der Transportstrecke bewegliche Einheit oder einen Teil davon dar, also bei einem Förderbandsystem beispielsweise das Förderband selbst oder einen Bandabschnitt des Förderbands. Die Transporttrajektorie T1 ist in Bezug auf ein Bezugskoordinatensystem festgelegt, d.h. im dargestellten Ausführungsbeispiel in Bezug auf das Basiskoordinatensystem BCS. Transportsysteme 10, insbesondere Langstatorlinearmotoren und Planarmotoren sind grundlegend bekannt, weshalb diese an dieser Stelle nicht näher beschrieben werden. In den Figuren wird lediglich ein Ausschnitt eines Transportsystems 10 dargestellt, wobei ein Abschnitt der Transporttrajektorie T1 und eine zugehörige Transporteinheit 1 zu sehen ist.

Es ist weiters ein Objekt 2 vorgesehen, wobei ein Objektpunkt TCP des Objekts 2 entlang einer Objektbahn $z_{TF}$ bewegt werden soll. Der Objektpunkt TCP des Objekts 2 kann frei am Objekt 2 festgelegt werden. Als Objekt 2 kann beispielsweise ein Teil, z.B. ein Werkzeug, einer, z.B. seriellen, Kinematik vorgesehen sein, wobei beispielsweise eine Werkzeugspitze als Objektpunkt TCP festgelegt werden kann.

Nach dem Stand der Technik erfolgt die Steuerung der Bewegung des Objektpunkts TCP durch Planung der Objektbahn $z_{TF}$ direkt in Bezug auf jenes Koordinatensystem, in welcher die Transporttrajektorie festgelegt ist, d.h. im dargestellten Ausführungsbeispiel in Bezug auf das Basiskoordinatensystem BCS. Dies ist jedoch nur möglich, wenn die Transporttrajektorie T1 und die Objektbahn $z_{TF}$ vorab bekannt sind und die Objektbahn $z_{TF}$ die Transporttrajektorie T1 beeinflussen kann.

Erfindungsgemäß wird hingegen die Objektbahn $z_{TF}$ in Bezug auf ein Transporteinheitenkoordinatensystem TF festgelegt, wobei das Transporteinheitenkoordinatensystem TF nicht dem Bezugskoordinatensystem entspricht, d.h. sich vom Bezugskoordinatensystem unterscheidet. In der dargestellten Ausführungsform entspricht das Bezugskoordinatensystem dem Basiskoordinatensystem BCS, woraus folgt, dass das Transporteinheitenkoordinatensystem TF nicht dem Basiskoordinatensystem BCS entspricht. Die Objektbahn $z_{TF}$ beschreibt grundlegend die Bahn, entlang welcher sich der Objektpunkt TCP in Bezug auf das Transporteinheitenkoordinatensystem TF bewegt. Da sich das Transporteinheitenkoordinatensystem TF mit der Transporteinheit 1 mit bewegt, wird die Objektbahn $z_{TF}$ mit der Transporteinheit 1 mit bewegt. Es wird zumindest ein Bahnpunkt der Objektbahn $z_{TF}$ vom Transporteinheitenkoordinatensystem TF in das erste Koordinatensystem (hier das Basiskoordinatensystem BCS) transformiert.

Sind mehrere Transporteinheiten 1 vorgesehen, so können die Transporteinheiten 1 jeweils ein eigenes Transporteinheitenkoordinatensystem TF aufweisen. Somit kann jeweils in Bezug auf die Transporteinheiten 1 jeweils eine synchrone Phase P2 vorgesehen sein, während welcher eine Bewegung des Objektpunkts TCP entlang einer Objektbahn $z_{TF}$ in Bezug auf das der Transporteinheit 1 zugehörigen Transporteinheitenkoordinatensystems TF, ungleich dem Bezugskoordinatensystem, vorgegeben wird, wobei das Transporteinheitenkoordinatensystem TF mit der Transporteinheit 1 entlang der Transporttrajektorie T1 bewegt wird und wobei zumindest ein Bahnpunkt der Objektbahn $z_{TF}$ vom Transporteinheitenkoordinatensystem TF in ein Basiskoordinatensystem BCS überführt wird, um die Bewegung des Objektpunkts TCP entlang der Objektbahn $z_{TF}$ in Bezug auf das Basiskoordinatensystem BCS zu steuern. Vorzugsweise sind die synchronen Phasen P2 der sequentiell vorgesehen, womit die Bewegung des Objektpunkts TCP entlang der jeweiligen Objektbahnen $z_{TF}$ sequentiell erfolgt. Der Übergang von einer synchronen Phase P2 in die nächste synchrone Phase P2 kann über einen Entkopplungsvorgang P3 aus der einen synchronen Phase und einen darauffolgenden Kopplungsvorgang P1 in die nächste synchrone Phase P2 erfolgen.

Es kann vorgesehen sein, dass das Transporteinheitenkoordinatensystem TF fest vorgegeben und nicht beeinflussbar ist, beispielsweise, indem eine externe Transporteinrichtung 1 vorgesehen ist.

Die Transporttrajektorie T1 kann vorab bekannt oder unbekannt sein. Ist die Transporttrajektorie T1 unbekannt, so kann sie auch unter Verwendung der Position und/oder der Geschwindigkeit und/oder der Beschleunigung der Transporteinheit 1 ermittelt, vorzugsweise über ein Modell extrapoliert, werden.

Es kann beispielhafterweise eine Raute als Objektbahn $z_{TF}$ vorgesehen sein. Es sind jedoch beliebige eindimensionale, zweidimensionale (oder in einem mehrdimensionalen Transporteinheitenkoordinatensystem TF auch mehrdimensionale) Objektbahnen $z_{TF}$ möglich, z.B. Kreise, Quader, Schraubenlinien etc. Die Objektbahn $z_{TF}$ kann in Bezug auf das Transporteinheitenkoordinatensystem TF fest vorgegeben werden oder auch während der synchronen Phase P2 oder eines Kopplungsvorgangs P1 ermittelt werden. Zudem kann die Objektbahn $z_{TF}$ in sich geschlossen sein, einen oder mehrere Umläufe (oder eine Fraktion von ganzzahligen Umläufen) aufweisen etc.

Das Basiskoordinatensystem BCS und/oder Transporteinheitenkoordinatensystem TF und/oder Bezugskoordinatensystem (welches hier dem Basiskoordinatensystem BCS entspricht) sind nur zur einfacheren Darstellung zweidimensional festgelegt und können beispielsweise auch ein dreidimensionales, mehrdimensionales kartesisches oder nicht-kartesisches Koordinatensystem darstellen. Auch können Basiskoordinatensystem BCS und/oder Transporteinheitenkoordinatensystem TF und Bezugskoordinatensystem z.B. ein mehrdimensionales (z.B. ein 6-dimensionales) nicht-kartesisches Koordinatensystem darstellen.

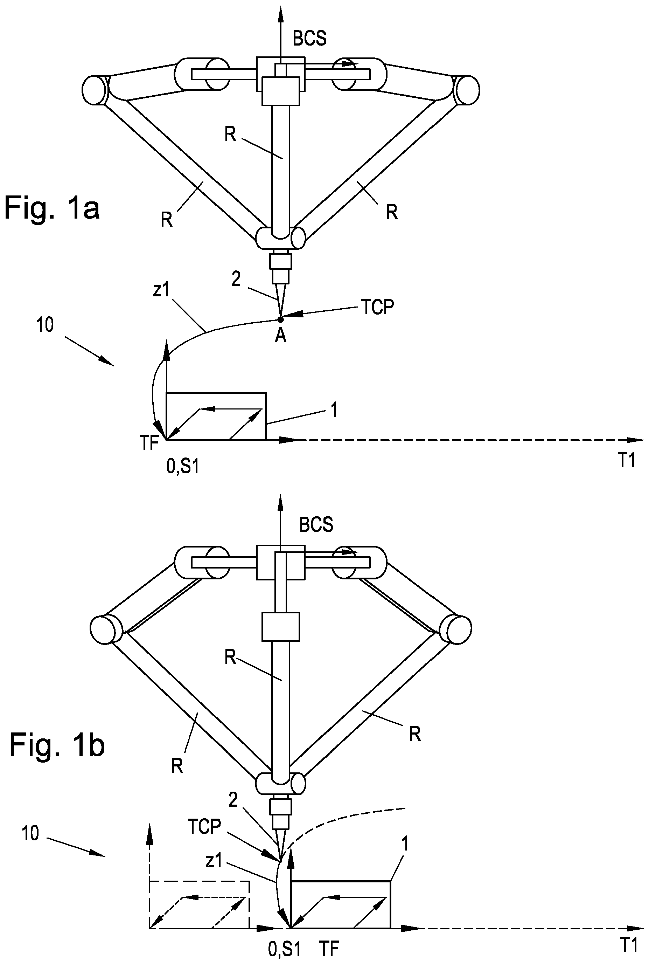

Der Objektpunkt TCP befindet sich in Fig. 1a in seiner Startposition A, welche vorzugsweise ruhend im Basiskoordinatensystem BCS angeordnet ist. Währenddessen bewegt sich die Transporteinheit 1 entlang der Transporttrajektorie T1 im Bezugskoordinatensystem, d.h. hier im Basiskoordinatensystem BCS. Für den Objektpunkt TCP ist ein, vom Bezugskoordinatensystem verschiedenes, Transporteinheitenkoordinatensystem TF vorgesehen.

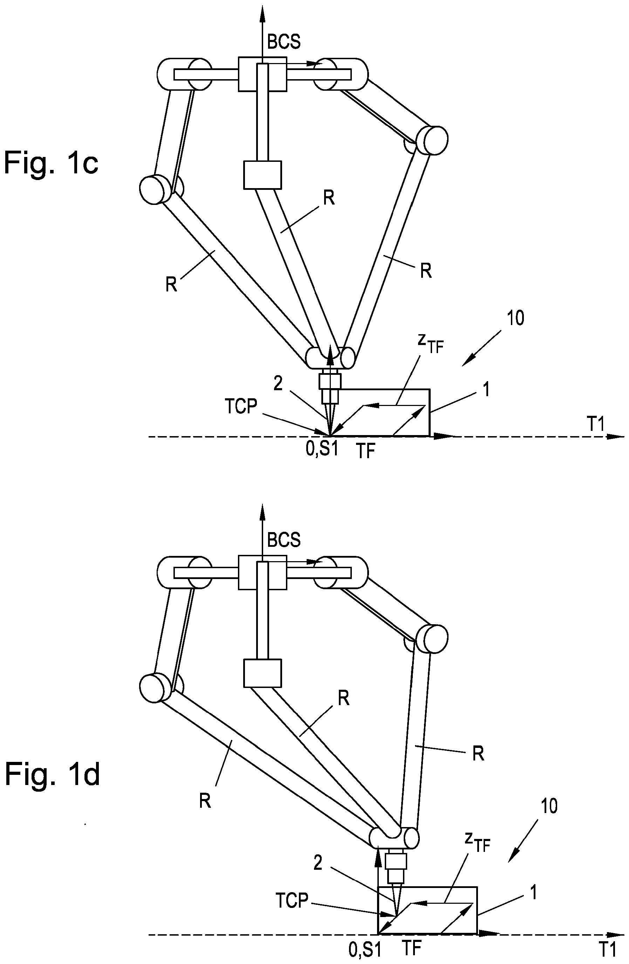

Es folgt ausgehend von Fig. 1a ein Kopplungsvorgang P1, wobei der Objektpunkt TCP entlang einer Kopplungsbahn z1 auf einen vorgegebenen Startpunkt S1 im Transporteinheitenkoordinatensystem TF bewegt wird. Der Startpunkt S1 bewegt sich somit gemeinsam mit dem Transporteinheitenkoordinatensystem TF entlang der Transporttrajektorie T1. Als Startpunkt S1 kann beispielsweise der Ursprung 0 des Transporteinheitenkoordinatensystem TF vorgesehen sein, wie es in den Figuren dargestellt ist. Die Kopplungsbahn z1 startet vorteilhafterweise an der Startposition A im Bezugskoordinatensystem (hier Basiskoordinatensystem BCS) und wird vorzugsweise im Transporteinheitenkoordinatensystem TF geplant. Damit startet der Objektpunkt TCP an der Startposition A (Fig 1a), folgt der Kopplungsbahn z1 (Fig. 1b) und kommt schlussendlich am Startpunkt S1 im Transporteinheitenkoordinatensystem TF (Fig. 1c) an.

Da die Transporteinheit 1 entlang der Transporttrajektorie T1 in Bezug auf das Bezugskoordinatensystem (hier das Basiskoordinatensystem BCS) eine Bewegung durchführt, kann die Kopplungsbahn z1 (und damit auch die Startposition A) mit der Transporteinheit 1 und somit mit dem Transporteinheitenkoordinatensystem TF mitbewegt werden. Bei der Berechnung der Kopplungsbahn z1 kann auch die Position/Geschwindigkeit/Beschleunigung des Objektpunkts TCP mitberücksichtigt werden, um einen stetigen Übergang des Objektpunkts TCP auf die Kopplungsbahn z1 sicherzustellen.

Weiters kann zumindest ein Abschnitt der Kopplungsbahn z1 anhand der Position und/oder der Geschwindigkeit und/oder der Beschleunigung der Transporteinheit 1 berechnet werden. Auch kann die Kopplungsbahn z1, vorzugsweise kontinuierlich, an die aktuelle Position und/oder Geschwindigkeit und/oder Beschleunigung angepasst werden. Damit kann sichergestellt werden, dass die Bewegung der Transporteinheit 1 (und damit des Startpunkts S1 im Transporteinheitenkoordinatensystem TK, hier der Ursprung 0 des Transporteinheitenkoordinatensystems TF) entlang der Transporttrajektorie T1 berücksichtigt wird und die Kopplungsbahn z1 auch tatsächlich im Startpunkt S1 mündet.

Liegt der Startpunkt S1, wie in den Figuren 1d dargestellt, auf der geplanten Objektbahn $z_{TF}$, so ist es vorteilhaft, wenn die in den Koppelkoordinaten S1 mündende Kopplungsbahn z1 stetig, vorzugsweise stetig bis zur ersten, zweiten oder höheren Ableitung, zur geplanten Objektbahn $z_{TF}$ verläuft. Stetig bis zur ersten Ableitung bedeutet eine stetige Geschwindigkeit, stetig bis zur zweiten Ableitung bedeutet eine stetige Beschleunigung (d.h. eine Beschleunigung ohne Sprung). Sobald der Objektpunkt TCP die Kopplungsbahn z1 durchlaufen hat, kann über die Koppelkoordinaten S1 direkt in die Objektbahn $z_{TF}$ übergegangen werden.

Wie erwähnt zeigt Fig. 1a den Objektpunkt TCP in seiner Startposition A, woraufhin der Kopplungsvorgang P1 gestartet wird. In Fig. 1b befindet sich der Objektpunkt TCP bereits auf der Kopplungsbahn z1 und in Fig. 1c bereits am Ende der Kopplungsbahn z1 im Startpunkt S1. Es ist zu beachten, dass sich in Fig. 1b die Transporteinheit 1 und damit auch das Transporteinheitenkoordinatensystem TF gegenüber Fig. 1a bereits weiter entlang der Transporttrajektorie T1 bewegt hat. Es ist zur deutlicheren Darstellung die Position der Transporteinheit 1 und des Transporteinheitenkoordinatensystems TF aus Fig. 1a strichliert in Fig. 1b dargestellt.

In Fig. 1c hat der Objektpunkt TCP die Koppelkoordinate S1 im Transporteinheitenkoordinatensystem TF, d.h. hier den Ursprung 0 des Transporteinheitenkoordinatensystems TF, erreicht (in Fig. 1c hat sich die Transporteinheit 1 gegenüber Fig. 1b entlang der Transporttrajektorie T1 weiterbewegt). Damit ist der Kopplungsvorgang P1 abgeschlossen und es kann die synchrone Phase P2 gestartet werden.

Der Objektpunkt TCP folgt, wie in Fig. 1d dargestellt, in der synchronen Phase P2 der Objektbahn $z_{TF}$, wobei die Objektbahn $z_{TF}$ in Bezug auf das Transporteinheitenkoordinatensystem TF vorgegeben wird. Da das Transporteinheitenkoordinatensystem TF mit der Transporteinheit 1 entlang der Transporttrajektorie T1 bewegt wird, wird erfindungsgemäß zumindest ein Abschnitt der Objektbahn $z_{TF}$ vom Transporteinheitenkoordinatensystem TF in das Basiskoordinatensystem BCS überführt. Damit ist immer zumindest ein jeweiliger Abschnitt des Bewegungsablaufs des Objektpunkts TCP in Bezug auf das Basiskoordinatensystem BCS bekannt, womit das Objekt 2 entsprechend aktuiert werden kann.

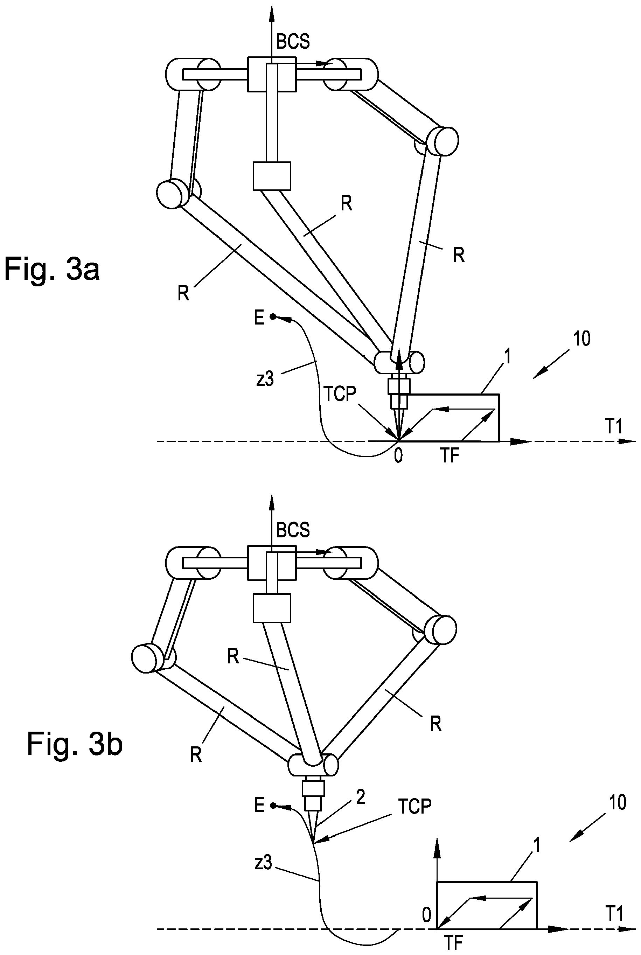

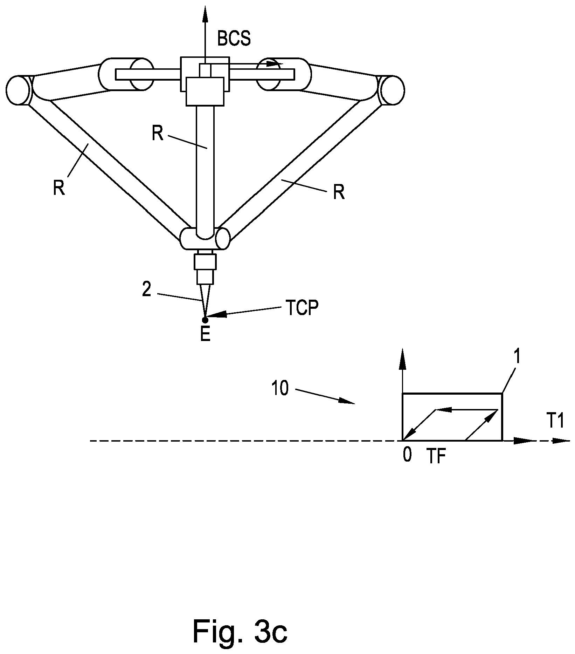

Nach dem Ende einer synchronen Phase P2 kann ein Entkopplungsvorgang P3 vorgesehen sein, während welchem eine Entkopplungsbahn z3 für den Objektpunkt TCP vorgesehen ist, wie es in Fig. 3a, 3b und 3c beispielhaft dargestellt ist. Die Entkopplungsbahn z3 startet auf der Objektbahn $z_{TF}$, vorzugsweise auf einem vorgegebenen Entkopplungspunkt, z.B. am Ursprung, und endet vorzugsweise an einer Endposition E im Basiskoordinatensystem BCS. Es ist vorteilhaft, wenn ein stetiger Übergang von der Objektbahn $z_{TF}$ in die Entkopplungsbahn z3 vorgegeben wird. Dabei kann der Übergang stetig bis zur ersten, zweiten oder höheren Ableitung verlaufen. Der Objektpunkt TCP befindet sich in Fig. 3a im Ursprung 0 als Entkopplungspunkt und in Fig. 3b auf der Entkopplungsbahn z3 und in Fig. 3c am Ende der Entkopplungsbahn z3 an der Endposition E.

Sind ein Kopplungsvorgang P1 und ein Entkopplungsvorgang P3 vorgesehen, so kann der Endpunkt E dem Startpunkt A entsprechen. Die Entkopplungsbahn z3 wird vorteilhafterweise im Basiskoordinatensystem BCS, in welchem sich auch die Endposition E befindet, berechnet.

Grundlegend kann die gesamte Objektbahn $z_{TF}$ vom Transporteinheitenkoordinatensystem TF in das Basiskoordinatensystem BCS überführt werden. Es ist jedoch vorteilhaft, wenn jeweils Bahnpunkte oder Bahnabschnitte transformiert werden, womit eine zeitoptimale Steuerung der Bewegung des Objekts 2 erfolgen kann. Die aktuelle Positionierung des Objektpunkts TCP auf der Objektbahn $z_{TF}$ kann als abhängig von einem Bahnfortschrittsparameter s betrachtet werden. Der Bahnfortschrittsparameter s kann als skalarer Parameter den Fortschritt des Objektpunkts TCP auf der Objektbahn $z_{TF}$ beschreiben.

Die Überführung in das Basiskoordinatensystem BCS kann somit erfolgen, indem die Objektbahn $z_{TF}$ und/oder Ableitungen nach dem Bahnfortschrittsparameter s und/oder der Zeit vorzugsweise punktweise oder abschnittsweise, in ein Maschinenkoordinatensystem MCS überführt wird. Dies kann mittels einer zeitabhängigen Transformationsvorschrift $T_{MCS \leftarrow TF}(t)$ erfolgen.

Weiters kann der in das Maschinenkoordinatensystem MCS überführte Abschnitt der Objektbahn $z_{MCS}$ wiederum, vorzugsweise punktweise oder abschnittsweise, vom Maschinenkoordinatensystem MCS in das Basiskoordinatensystem BCS überführt werden. Dies kann, insbesondere wenn zuvor mittels einer zeitabhängigen Transformationsvorschrift $T_{MCS \leftarrow TF}(t)$ in das Maschinenkoordinatensystem MCS transformiert wurde, mittels einer vom Bahnfortschrittsparameter s abhängigen Transformationsvorschrift $T_{BCS \leftarrow MCS}(s)$ erfolgen.

Die Transformation vom Maschinenkoordinatensystem MCS in das Basiskoordinatensystem BCS kann aber auch mittels einer zeitabhängigen Transformationsvorschrift $T_{BCS \leftarrow MCS}(t)$ oder mittels einer von der Zeit und vom Bahnfortschrittsparameter s abhängigen Transformationsvorschrift $T_{BCS \leftarrow MCS}(s,t)$ erfolgen.

Die Transporttrajektorie T1 kann für den Zeithorizont, für welchen die Überführung in das Basiskoordinatensystem BCS erfolgt, als bekannt angenommen werden. Das Maschinenkoordinatensystem MCS kann auch einem festen globalen Koordinatensystem entsprechen. Wie erwähnt kann natürlich auch direkt eine Transformation in das Basiskoordinatensystem BCS erfolgen ohne zuvor in das Maschinenkoordinatensystem MCS zu transformieren.

Die zeitabhängige Transformationsvorschrift $T_{MCS \leftarrow TF}(t)$ oder $T_{BCS \leftarrow MCS}(t)$ beinhaltet dabei die zeitabhängige Bewegung des Transporteinheitenkoordinatensystems TF mit der Transporteinheit 1 entlang der Transporttrajektorie T1.

Durch die zeitabhängigen und vom Bahnfortschrittsparameter s abhängigen Transformationsvorschriften $T_{MCS\leftarrow TF}(t)$ und $T_{BCS\leftarrow MCS}(s)$ oder $T_{MCS\leftarrow TF}(s)$ und $T_{BCS\leftarrow MCS}(t)$ ergeben sich neue partielle Ableitungen bezüglich des Bahnfortschrittparameters s

$$\frac{\partial z_{BCS}(s,t)}{\partial s}$$ und bezüglich der Zeit t $$\frac{\partial z_{BCS}(s,t)}{\partial t}$$ - ab

der zweiten Ableitung ergeben sich zudem Mischterme.

Der Objektpunkt TCP kann unter Verwendung einer Anzahl mit dem Objekt 2 verbundener Achsen R entlang der Objektbahn $z_{TF}$ bewegt werden. Für die Achsen R können kinematische Achszustände, z.B. Achswinkel und/oder Ableitungen davon, verwendet werden. Die kinematischen Achszustände können in Bezug auf ein kartesisches Koordinatensystem, z.B. ein Achskoordinatensystem ACS, vorgegeben sein. Somit können die partiellen Ableitungen der Objektbahn

$$\frac{\partial z_{BCS}(s,t)}{\partial s}, \ldots, \frac{\partial z_{BCS}(s,t)}{\partial t}, \ldots$$ mittels einer Inverskinematik in das Achskoordinatensystem ACS umgewandelt werden: ( $$\frac{\partial q_{ACS}(s,t)}{\partial s}, \frac{\partial q_{ACS}(s,t)}{\partial t}, \ldots$$ ).

Damit ist es zudem möglich eine zeitliche Ableitung des Bahnfortschrittsparameters s(t) derart zu berechnen, dass zumindest ein kinematischer Achszustand einer Achse R innerhalb von Achsgrenzwerten liegt. Die Geschwindigkeit des fortschreitenden Objektpunkts TCP entlang der Objektbahn $z_{TF}$ kann über den zeitlichen Verlauf des Bahnfortschrittsparameters s(t) dargestellt werden.

Beispielsweise kann eine Geschwindigkeit $\dot{q}_{ACS}$ einer Achse R als kinematischer Achszustand vorgesehen sein, wobei eine maximale Geschwindigkeit $\dot{q}_{ACS,max}$ und/oder eine minimale Geschwindigkeit $\dot{q}_{ACS,min}$ als Achsgrenzwert vorgesehen sind. Somit wird sichergestellt, dass die Geschwindigkeit $\dot{q}_{ACS}$ der Achse R die maximale Geschwindigkeit $\dot{q}_{ACS,max}$ nicht überschreitet und/oder oder die minimale Geschwindigkeit $\dot{q}_{ACS,min}$ nicht unterschreitet:

$$\dot{q}_{ACS,max} \geq \dot{q}_{ACS} = \frac{\partial q_{ACS}(s,t)}{\partial s}\dot{s} + \frac{\partial q_{ACS}(s,t)}{\partial t} ;$$

$$\dot{q}_{ACS,min} \leq \dot{q}_{ACS} = \frac{\partial q_{ACS}(s,t)}{\partial s}\dot{s} + \frac{\partial q_{ACS}(s,t)}{\partial t} .$$

Unter Verwendung dieser Zusammenhänge kann die zeitliche Ableitung des Bahnfortschrittsparameters s bestimmt werden, um zu bestimmen wie rasch sich der Bahnfortschrittsparameter s ändern kann, ohne dass die Achsgrenzwerte durch die Achszustände überschritten werden.

Es kann auch vorgesehen sein, dass ein kinematischer Achszustand einer Achse R sich stets an einem Achsgrenzwert $\dot{q}_{ACS,max}$, $\dot{q}_{ACS,min}$ befindet, um eine optimale Bewegung des Objektpunkts TCP entlang der Objektbahn $z_{TF}$ (z.B. in Bezug auf die Zeit) zu erhalten. Der Faktor kann beispielsweise eine minimale Zeit darstellen, womit die Bewegung zeitoptimal ist. Stellt der Faktor eine minimale Energie dar, so ist die Bewegung minimal in Bezug auf die auftretende Energie.

Um sicherzustellen, dass der Objektpunkt TCP der Objektbahn $z_{TF}$ folgt, kann beispielsweise der Bahnfortschrittsparameter s(t) für die aktuelle Zeit t ausgewertet werden und die dadurch ermittelte Position $z_{TF}(t)$ auf der Objektbahn $z_{TF}$ in das Basiskoordinatensystem BCS überführt werden, woraus wiederum unter Verwendung der Inverskinematik die Achswinkel bestimmt werden können. Falls die zur Planung verwendete Bewegung des Transporteinheitenkoordinatensystems TF entlang der Transporttrajektorie T1 von der tatsächlichen Bewegung abweicht, werden die Achsgrenzwerte möglicherweise überschritten.

Vorzugsweise wird in der synchronen Phase P2 und/oder während des Kopplungsvorgangs P1 und/oder während des Entkoppelvorgangs P3 sichergestellt, dass eine Geschwindigkeit und/oder eine Beschleunigung und/oder ein Ruck des Objektpunkts TCP entsprechende Achsgrenzwerte nicht verletzen.

**Patentansprüche**

1. Verfahren zum Steuern einer Bewegung eines Objekts (2) in Relation zu einer Transporteinheit (1) eines Transportsystems (10), wobei die Transporteinheit (1) in Bezug auf ein Bezugskoordinatensystem entlang einer vorgegeben Transporttrajektorie (T1) bewegt wird, **dadurch gekennzeichnet, dass** eine synchrone Phase vorgesehen wird, während der eine Bewegung eines Objektpunkts (TCP) des Objekts (2) entlang einer Objektbahn ($z_{TF}$) in Bezug auf ein Transporteinheitenkoordinatensystem (TF), ungleich dem Bezugskoordinatensystem, vorgegeben wird, wobei das Transporteinheitenkoordinatensystem (TF) mit der Transporteinheit (1) entlang der Transporttrajektorie (T1) bewegt wird, **dass** die Transporttrajektorie (T1) zumindest abschnittsweise unter Verwendung der Position und/oder der Geschwindigkeit und/oder der Beschleunigung der Transporteinheit (1) ermittelt wird, **und dass** zumindest ein Bahnpunkt der Objektbahn ($z_{TF}$) vom Transporteinheitenkoordinatensystem (TF) in ein Basiskoordinatensystem (BCS) transformiert wird, um die Bewegung des Objektpunkts (TCP) entlang der Objektbahn ($z_{TF}$) in Bezug auf das Basiskoordinatensystem (BCS) zu steuern.

2. Verfahren nach Anspruch 1, **dadurch gekennzeichnet, dass** das Bezugskoordinatensystem dem Basiskoordinatensystem (BCS) entspricht und/oder als Basiskoordinatensystem (BCS) ein festes globales Koordinatensystem verwendet wird.

3. Verfahren nach Anspruch 1 oder 2, **dadurch gekennzeichnet, dass** die Transporttrajektorie (T1) vom Transportsystem (1) vorgegeben wird.

4. Verfahren nach einem der Ansprüche 1 bis 3, **dadurch gekennzeichnet, dass** die Objektbahn ($z_{TF}$) in Bezug auf das Transporteinheitenkoordinatensystem (TF) vorab festgelegt wird.

5. Verfahren nach einem der Ansprüche 1 bis 4, **dadurch gekennzeichnet, dass** ein Fortschritt des Objektpunkts (TCP) entlang der Objektbahn ($z_{TF}$) als Bahnfortschrittsparameter (s) angegeben wird, **dass** die Objektbahn ($z_{TF}$) und/oder Ableitungen der parametrierten Objektbahn ($z_{TF}$) entlang des Bahnfortschrittsparameters (s), zumindest abschnittsweise, vorzugsweise punktweise, unter Verwendung einer ersten Transformationsvorschrift vom Transporteinheitenkoordinatensystem (TF) in ein Maschinenkoordinatensystem (MCS) überführt wird, **und dass** die in das Maschinenkoordinatensystem (MCS) überführte Objektbahn ($z_{MCS}$) unter Verwendung einer zweiten Transformationsvorschrift in das Basiskoordinatensystem (BCS) überführt wird.

6. Verfahren nach Anspruch 5, **dadurch gekennzeichnet, dass,** die erste Transformationsvorschrift ($T_{MCS\leftarrow TF}(t)$) zeitabhängig ist und/oder die zweite Transformationsvorschrift ($T_{BCS\leftarrow MCS}(s)$) vom Bahnfortschrittsparameter (s) abhängig ist.

7. Verfahren nach Anspruch 5 oder 6, **dadurch gekennzeichnet, dass,** die zweite Transformationsvorschrift ($T_{BCS\leftarrow MCS}(t)$) zeitabhängig ist.

8. Verfahren nach Anspruch 5, **dadurch gekennzeichnet, dass** die erste Transformationsvorschrift ($T_{MCS\leftarrow TF}(s)$) vom Bahnfortschrittsparameter (s) abhängig ist, **und dass** die zweite Transformationsvorschrift ($T_{BCS\leftarrow MCS}(t)$) zeitabhängig ist.

9. Verfahren nach einem der Ansprüche 1 bis 8, **dadurch gekennzeichnet, dass** vor der synchronen Phase ein Kopplungsvorgang vorgesehen ist, wobei während dem Kopplungsvorgang der Objektpunkt (TCP) entlang einer Kopplungsbahn (z1) auf einen vorgegebenen Startpunkt (S1) im Transporteinheitenkoordinatensystem (TF) bewegt wird.

10. Verfahren nach Anspruch 9, **dadurch gekennzeichnet, dass** der Startpunkt (S1) auf der Objektbahn ($z_{TF}$) angeordnet ist.

11. Verfahren nach Anspruch 10, **dadurch gekenn-**

zeichnet, dass** die Kopplungsbahn (z1) stetig an die Objektbahn ($z_{TF}$) anschließt.

12. Verfahren nach einem der Ansprüche 9 bis 11, **dadurch gekennzeichnet, dass** die Kopplungsbahn (z1) an einer festen Ruheposition (A1) im Basiskoordinatensystem (BCS) startet, **oder dass** die Kopplungsbahn (z1) der Objektpunkt (TCP) aus einer Bewegung in die Kopplungsbahn (z1) überführt wird.

13. Verfahren nach einem der Ansprüche 9 bis 12, **dadurch gekennzeichnet, dass** die Kopplungsbahn (z1) unter Verwendung der Position und/oder der Geschwindigkeit und/oder der Beschleunigung der Transporteinheit (1), ermittelt, vorzugsweise über ein Modell extrapoliert, wird.

14. Verfahren nach einem der Ansprüche 1 bis 13, **dadurch gekennzeichnet, dass** das Objekt (2) unter Verwendung einer Anzahl an Achsen (R) entlang der Objektbahn ($z_{TF}$) bewegt wird, **und dass** aus dem in das Basiskoordinatensystem (BCS) transformierten zumindest einen Bahnpunkt der Objektbahn ($z_{TF}$) mittels einer Inverskinematik kinematische und/oder dynamische Achszustände, vorzugsweise Achswinkel und/oder deren zeitliche und/oder räumliche Ableitungen, der Anzahl Achsen (R) ermittelt werden.

15. Verfahren nach Anspruch 14, **dadurch gekennzeichnet, dass** die Achszustände mit Achsgrenzwerten verglichen werden.

16. Verfahren nach einem der Ansprüche 1 bis 15, **dadurch gekennzeichnet, dass** nach der synchronen Phase ein Entkopplungsvorgang vorgesehen ist, wobei während dem Entkopplungsvorgang der Objektpunkt (TCP) entlang einer Entkopplungsbahn (z3) von der Objektbahn ($z_{TF}$) entfernt wird.

17. Verfahren nach Anspruch 16, **dadurch gekennzeichnet, dass** die Entkopplungsbahn (z1) stetig an die Objektbahn ($z_{TF}$) anschließt und/oder die Entkopplungsbahn (z3) auf einem vorgegebenen Endpunkt (E1) im Basiskoordinatensystem (BCS) endet.

18. Verfahren nach einem der Ansprüche 1 bis 17, **dadurch gekennzeichnet, dass** nach der synchronen Phase ein Übergangsvorgang eine weitere synchrone Phase vorgesehen ist, wobei während des Übergangsvorgangs der Objektpunkt (TCP) entlang einer Übergangstrajektorie von der Objektbahn ($z_{TF}$) auf einen weiteren Startpunkt in einem weiteren Transporteinheitenkoordinatensystem bewegt wird.

19. Verfahren nach einem der Ansprüche 1 bis 18, **dadurch gekennzeichnet, dass** bei der Steuerung der Bewegung des Objektpunkts (TCP) sichergestellt wird, dass die Geschwindigkeit des Objektpunkts (TCP) vorgegebene kinematische Limits nicht überschreitet.

20. Verfahren nach Anspruch 19, **dadurch gekennzeichnet, dass** die Steuerung der Bewegung des Objektpunkts (TCP) möglichst an einem vorgegebenen kinematischen Limit erfolgt.

21. System aus einem Transportsystem (10) mit einer entlang einer in Bezug auf ein Bezugskoordinatensystem vorgegeben Transporttrajektorie (T1) bewegten Transporteinheit (1) und einem in Relation zur Transporteinheit (1) bewegten Objekt (2), **dadurch gekennzeichnet, dass** eine Steuereinheit (11) vorgesehen ist, welche ausgestaltet ist, während einer synchronen Phase eine Bewegung eines Objektpunkts (TCP) des Objekts (2) entlang einer Objektbahn ($z_{TF}$) in Bezug auf ein vom Bezugskoordinatensystem verschiedenes Transporteinheitenkoordinatensystem (TF), welches mit der Transporteinheit (1) entlang der Transporttrajektorie (T1) bewegt wird, vorzugeben, wobei die Transporttrajektorie (T1) unter Verwendung der Position und/oder der Geschwindigkeit und/oder der Beschleunigung der Transporteinheit (1) zumindest abschnittsweise ermittelbar ist, und zumindest einen Bahnpunkt der Objektbahn ($z_{TF}$), vom Transporteinheitenkoordinatensystem (TF) in ein vom Bezugskoordinatensystem verschiedenes Basiskoordinatensystem (BCS) zu transformieren, um die Bewegung des Objektpunkts (TCP) in Bezug auf das Basiskoordinatensystem (BCS) zu steuern.

22. System nach Anspruch 21, **dadurch gekennzeichnet, dass** das Transportsystem (10) ein Langstatorlinearmotor, ein Planarmotor oder ein Förderband ist und/oder das Objekt (2) Teil einer Kinematik ist.

**Claims**

1. A method for controlling a movement of an object (2) in relation to a transport unit (1) of a transport system (10), wherein the transport unit (1) is moved along a predefined transport trajectory (T1) with respect to a reference coordinate system, **characterized in that** a synchronous phase is provided, during which a movement of an object point (TCP) of the object (2) along an object path ($z_{TF}$) with respect to a transport unit coordinate system (TF), being different from the reference coordinate system, is predefined, wherein the transport unit coordinate system (TF) containing the transport unit (1) is moved along the transport trajectory (T1), **in that** the transport trajectory (T1) is determined at least in sections using the position and/or the speed and/or the acceleration of the transport unit (1), **and in that** at least one path point of the object path ($z_{TF}$) is transformed from the transport unit coordinate system (TF) to a base coordinate system (BCS), to control the movement of the object point (TCP) along the object path ($z_{TF}$) with respect to the base coordinate system (BCS).

2. The method according to claim 1, **characterized in that** the reference coordinate system corresponds to the base coordinate system (BCS) and/or a fixed global coordinate system is used as the base coordinate system (BCS).

3. The method according to claim 1 or 2, **characterized in that** the transport trajectory (T1) is predefined by the transport system (1).

4. The method according to any of claims 1 to 3, **characterized in that** the object path ($z_{TF}$) is defined in advance in relation to the transport unit coordinate system (TF).

5. The method according to any of claims 1 to 4, **characterized in that** the progress of the object point (TCP) along the object path ($z_{TF}$) is specified as a path progress parameter (s), **in that** the object path ($z_{TF}$) and/or derivatives of the parameterized object path ($z_{TF}$) along the path progress parameter (s) are converted from the transport unit coordinate system (TF) to a machine coordinate system (MCS) at least in sections, preferably point-by-point, using a first transformation rule, **and in that** the object path ($z_{MCS}$) converted to the machine coordinate system (MCS) is converted to the base coordinate system (BCS) using a second transformation rule.

6. The method according to claim 5, **characterized in that** the first transformation rule ($T_{MCS \leftarrow TF}(t)$) is time-dependent and/or the second transformation rule ($T_{BCS \leftarrow MCS}(s)$) depends on the path progress parameter (s).

7. The method according to claim 5 or 6, **characterized in that** the second transformation rule ($T_{BCS \leftarrow MCS}(t)$) is time-dependent.

8. The method according to claim 5, **characterized in that** the first transformation rule ($T_{MCS \leftarrow TF}(s)$) depends on the path progress parameter (s), **and in that** the second transformation rule ($T_{BCS \leftarrow MCS}(t)$) is time-dependent.

9. The method according to any of the claims 1 to 8, **characterized in that** a coupling operation is provided before the synchronous phase, wherein during the coupling operation the object point (TCP) is moved along a coupling path ($z1$) to a predetermined starting point (S1) in the transport unit coordinate system (TF).

10. The method according to claim 9, **characterized in that** the starting point (S1) is arranged on the object path ($z_{TF}$).

11. The method according to claim 10, **characterized in that** the coupling path (z1) is continuously connected to the object path ($z_{TF}$).

12. The method according to any of claims 9 to 11, **characterized in that** the coupling path (z1) starts at a fixed rest position (A1) in the base coordinate system (BCS) **or that** the coupling path (z1) the object point (TCP) is transferred from a movement to the coupling path (z1).

13. The method according to any of claims 9 to 11, **characterized in that** the coupling path (z1) is determined, preferably extrapolated via a model, using the position and/or the speed and/or the acceleration of the transport unit (1).

14. The method according to any of claims 1 to 13, **characterized in that** the object (2) is moved along the object path ($z_{TF}$) using a number of axes (R), **and in that** kinematic and/or dynamic axis states, preferably axis angles and/or their temporal and/or spatial derivatives, of the number of axes (R) are determined from the at least one path point of the object path ($z_{TF}$) transformed into the base coordinate system (BCS) by means of inverse kinematics.

15. The method according to claim 14, **characterized in that** the axis states are compared to axis limit values.

16. The method according to any of claims 1 to 15, **characterized in that** after the synchronous phase, a decoupling operation is provided, wherein during the decoupling operation the object point (TCP) is removed from the object path ($z_{TF}$) along a decoupling path (z3).

17. The method according to claim 16, **characterized in that** the decoupling path (z1) is continuously connected to the object path ($z_{TF}$) and/or decoupling path (z3) terminates at a predetermined endpoint (E1) in the base coordinate system (BCS).

18. The method according to any of claims 1 to 17, **characterized in that** after the synchronous phase, a transition operation is provided a further synchronous phase, wherein during the transition operation the object point (TCP) is moved along a transition trajectory from the object path ($z_{TF}$) to a further starting point in a further transport unit coordinate system.

19. The method according to any of claims 1 to 18, **characterized in that** when controlling the movement of the object point (TCP), it is ensured that the speed of the object point (TCP) does not exceed predetermined kinematic limits.

20. The method according to claim 19, **characterized in that** the movement of the object point (TCP) is controlled as far as possible at a predetermined kinematic limit.

21. A system comprising a transport system (10) having a transport unit (1) moved along a transport trajectory (T1) that is predetermined with respect to a reference coordinate system and an object (2) that is moved in relation to the transport unit (1), **characterized in that** a control unit (11) is provided that is designed to predefine, during a synchronous phase, a movement of an object point (TCP) of the object (2) along an object path ($z_{TF}$) in relation to a transport unit coordinate system (TF) different from the reference coordinate system, which transport unit coordinate system is moved along the transport trajectory (T1) with the transport unit (1), wherein the transport trajectory (T1) can be determined at least in sections using the position and/or the speed and/or the acceleration of the transport unit (1), and to convert at least one path point of the object path ($z_{TF}$) from the transport unit coordinate system (TF) to a base coordinate system (BCS) different from the reference coordinate system to control the movement of the object point (TCP) with respect to the base coordinate system (BCS).

22. The system according to claim 21, **characterized in that** the transport system (10) is a long stator linear motor, a planar motor or a conveyor belt and/or the object (2) is part of a kinematics.

## Revendications

1. Procédé pour la commande d'un mouvement d'un objet (2) par rapport à une unité de transport (1) d'un système de transport (10), l'unité de transport (1) étant déplacée par rapport à un système de coordonnées de référence le long d'une trajectoire de transport (T1) prédéterminée, **caractérisé en ce qu'**une phase synchrone est prévue, pendant laquelle un mouvement d'un point d'objet (TCP) de l'objet (2) le long d'une voie d'objet ($z_{TF}$) par rapport à un système de coordonnées d'unité de transport (TF), différent du système de coordonnées de référence, est prédéfini, le système de coordonnées d'unité de transport (TF) étant déplacé avec l'unité de transport (1) le long de la trajectoire de transport (T1), **en ce que** la trajectoire de transport (T1) est déterminée au moins par sections à l'aide de la position et/ou la vitesse et/ou l'accélération de l'unité de transport (1), et **en ce qu'**au moins un point de voie de la voie d'objet ($z_{TF}$) est transformé du système de coordonnées d'unité de transport (TF) en un système de coordonnées de base (BCS) afin de commander le mouvement du point d'objet (TCP) le long de la voie d'objet ($z_{TF}$) par rapport au système de coordonnées de base (BCS).

2. Procédé selon la revendication 1, **caractérisé en ce que** le système de coordonnées de référence correspond au système de coordonnées de base (BCS) et/ou un système de coordonnées global fixe est utilisé comme système de coordonnées de base (BCS).

3. Procédé selon la revendication 1 ou 2, **caractérisé en ce que** la trajectoire de transport (T1) est prédéfinie par le système de transport (1).

4. Procédé selon l'une des revendications 1 à 3, **caractérisé en ce que** la voir d'objet ($z_{TF}$) est préalablement établie par rapport au système de coordonnées d'unité de transport (TF).

5. Procédé selon l'une des revendications 1 à 4, **caractérisé en ce qu'**une progression du point objet (TCP) le long de la voie d'objet ($z_{TF}$) est indiquée comme paramètre de progression de trajectoire (s), **en ce que** la voie d'objet ($z_{TF}$) et/ou des dérivations de la voie d'objet ($z_{TF}$) paramétrée le long du paramètre de progression de trajectoire (s), sont transférées au moins par sections, de préférence par points, à l'aide d'une première règle de transformation, du système de coordonnées d'unité de transport (TF) dans un système de coordonnées de machine (MCS), et **en ce que** la voie d'objet ($z_{MCS}$) transférée dans le système de coordonnées de machine (MCS) est transférée dans le système de coordonnées de base (BCS) à l'aide d'une seconde règle de transformation.

6. Procédé selon la revendication 5, **caractérisé en ce que,** la première règle de transformation ($T_{MCS\leftarrow TF}(t)$) dépend du temps et/ou la seconde règle de transformation ($T_{BCS\leftarrow MCS}(s)$) dépend du paramètre de progression de trajectoire (s).

7. Procédé selon la revendication 5 ou 6, **caractérisé en ce que,** la seconde règle de transformation ($T_{BCS\leftarrow MCS}(t)$) dépend du temps.

8. Procédé selon la revendication 5, **caractérisé en ce que** la première règle de transformation ($T_{MCS\leftarrow TF}(s)$) dépend du paramètre de progression de trajectoire (s), et **en ce que** la seconde règle de transformation ($T_{BCS\leftarrow MCS}(t)$) dépend du temps.

9. Procédé selon l'une des revendications 1 à 8, **caractérisé en ce qu'**une opération d'accouplement est prévue avant la phase synchrone, le point d'objet (TCP) étant déplacé pendant l'opération d'accouplement le long d'une voie d'accouplement ($z1$) vers un point de départ (S1) prédéfini dans le système de coordonnées d'unité de transport (TF).

10. Procédé selon la revendication 9, **caractérisé en ce que** le point de départ (S1) est disposé sur la voie d'objet ($z_{TF}$).

11. Procédé selon la revendication 10, **caractérisé en ce que** la voie d'accouplement ($z1$) se raccorde de manière continue à la voie d'objet ($z_{TF}$).

12. Procédé selon l'une des revendications 9 à 11, **caractérisé en ce que** la voie d'accouplement ($z1$) démarre à une position de repos fixe (A1) dans le système de coordonnées de base (BCS), ou **en ce que** la voie d'accouplement ($z1$) du point d'objet (TCP) est transférée d'un mouvement vers la voie d'accouplement ($z1$).

13. Procédé selon l'une des revendications 9 à 12, **caractérisé en ce que** la voie d'accouplement ($z1$) est déterminée, de préférence extrapolée par l'intermédiaire d'un modèle, à l'aide de la position et/ou la vitesse et/ou l'accélération de l'unité de transport (1).

14. Procédé selon l'une des revendications 1 à 13, **caractérisé en ce que** l'objet (2) est déplacé le long de la voie d'objet ($z_{TF}$) à l'aide d'un certain nombre d'axes (R), et **en ce que** des états cinématiques et/ou dynamiques d'axes, de préférence des angles d'axes et/ou leurs dérivées temporelles et/ou spatiales, du nombre d'axes (R) sont déterminés à partir de l'au moins un point de voie de la voie d'objet ($z_{TF}$) transformée dans le système de coordonnées de base (BCS) au moyen d'une cinématique inverse.

15. Procédé selon la revendication 14, **caractérisé en ce que** les états des essieux sont comparés à des valeurs limites des essieux.

16. Procédé selon l'une des revendications 1 à 15, **caractérisé en ce qu'**une opération de désaccouplement est prévue après la phase synchrone, le point objet (TCP) étant éloigné de la voie d'objet ($z_{TF}$) le long d'une voie de désaccouplement ($z3$) pendant l'opération de désaccouplement.

17. Procédé selon la revendication 16, **caractérisé en ce que** la voie de désaccouplement ($z1$) se raccorde de manière continue à la voie d'objet ($z_{TF}$) et/ou la voie de désaccouplement ($z3$) se termine sur un point final (E1) prédéfini dans le système de coordonnées de base (BCS).

18. Procédé selon l'une des revendications 1 à 17, **ca-**

**ractérisé en ce que,** après la phase synchrone, une opération de transition est prévue vers une autre phase synchrone, pendant l'opération de transition, le point objet (TCP) étant déplacé le long d'une trajectoire de transition depuis la voie objet ($z_{TF}$) vers un autre point de départ dans un autre système de coordonnées d'unité de transport.

19. Procédé selon l'une des revendications 1 à 18, **caractérisé en ce que,** lors de la commande du mouvement du point d'objet (TCP), il est assuré que la vitesse du point d'objet (TCP) ne dépasse pas des limites cinématiques prédéfinies.

20. Procédé selon la revendication 19, **caractérisé en ce que** la commande du mouvement du point d'objet (TCP) s'effectue autant que possible à une limite cinématique prédéfinie.

21. Système composé d'un système de transport (10) comportant une unité de transport (1) déplacée le long d'une trajectoire de transport (T1) prédéfinie par rapport à un système de coordonnées de référence et un objet (2) déplacé par rapport à l'unité de transport (1), **caractérisé en ce qu'**une unité de commande (11) est prévue, laquelle est équipée pour prédéfinir, pendant une phase synchrone, un mouvement d'un point d'objet (TCP) de l'objet (2) le long d'une voie d'objet ($z_{TF}$) par rapport à un système de coordonnées d'unité de transport (TF) différent du système de coordonnées de référence, lequel point d'objet est déplacé avec l'unité de transport (1) le long de la trajectoire de transport (T1), la trajectoire de transport (T1) pouvant être déterminée au moins par sections à l'aide de la position et/ou la vitesse et/ou l'accélération de l'unité de transport (1), et à transformer au moins un point de voie de la voie d'objet ($z_{TF}$), du système de coordonnées d'unité de transport (TF) en un système de coordonnées de base (BCS) différent du système de coordonnées de référence, afin de commander le mouvement du point d'objet (TCP) par rapport au système de coordonnées de base (BCS).

22. Système selon la revendication 21, **caractérisé en ce que** le système de transport (10) est un moteur linéaire à stator long, un moteur plan ou une bande transporteuse et/ou l'objet (2) fait partie d'une cinématique.

Fig. 1a

Fig. 1b

Fig. 1c

Fig. 1d

Fig. 2a

$T_{BCS \leftarrow MCS}(s)$

BCS

MCS

$z_{BCS}(s,t)$

R

$T_{MCS \leftarrow TF}(s,t)$

R

R

R

$z_{TF}(s)$

10

TCP

1

0  TF

T1

Fig. 2b

BCS

$z_{BCS}(s,t)$

R

R

R

10

TCP

1

$\dfrac{\partial z_{BCS}(s,t)}{\partial t}$

0  TF

T1

$\dfrac{\partial z_{BCS}(s,t)}{\partial s}$

Fig. 3a

Fig. 3b

BCS

R

R

R

2

TCP

E

10

1

T1

0  TF

# Fig. 3c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10261491 B1
- US 5727132 A

- DE 10162967 A1